(19) Europäisches Patentamt
European Patent Office
Office européen des brevets

(11) Veröffentlichungsnummer: **0 297 311 A2**

(12) **EUROPÄISCHE PATENTANMELDUNG**

(21) Anmeldenummer: **88108962.7**

(51) Int. Cl.⁴: **C08G 63/60 , C08G 63/68**

(22) Anmeldetag: **04.06.88**

(30) Priorität: **27.06.87 DE 3721256**

(43) Veröffentlichungstag der Anmeldung: **04.01.89 Patentblatt 89/01**

(84) Benannte Vertragsstaaten: **AT BE CH DE ES FR GB GR IT LI LU NL SE**

(71) Anmelder: **Akzo N.V.**
**Postbus 9300 Velperweg 76**
**NL-6800 SB Arnhem(NL)**

(72) Erfinder: **Brodowski, Walter, Dr.**
**Neudorfer Strasse 8**
**D-8762 Amorbach(DE)**

(74) Vertreter: **Fett, Günter**
**Akzo Patente GmbH Kasinostrasse 19 - 23**
**D-5600 Wuppertal 1(DE)**

(54) **In der Schmelze verarbeitbare thermotrope vollaromatische Polyester.**

(57) Thermotrope voll-aromatische Polyester, die im wesentlichen

(a) zu 20-70 Molprozent aus den wiederkehrenden Einheiten der Formel

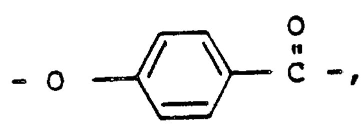

(b) 10-40 Molprozent aus den Einheiten der Formel

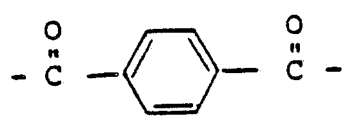

(c) 0-15 Molprozent aus einer oder beiden Einheiten der Formel

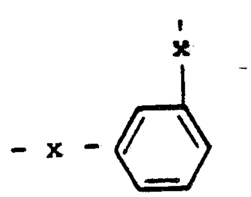

worin X = $-\underset{O}{\underset{\|}{C}}-$ oder -O- bedeutet,

(d) 0-33 Molprozent aus den Einheiten der Formel (n)

EP 0 297 311 A2

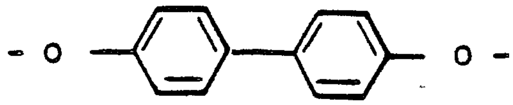 und/oder 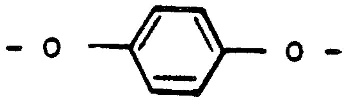

und

(e) 2-40 Molprozent aus den Einheiten der Formel

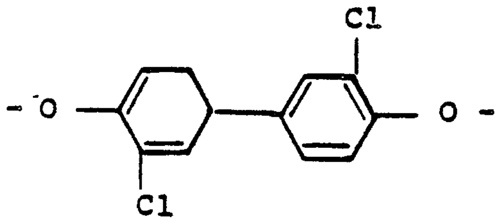

bestehen, besitzen hohe Vicat-B-Temperaturen und lassen sich bei Temperaturen unterhalb von 400 °C thermoplastisch verarbeiten.

## In der Schmelze verarbeitbare thermotrope voll-aromatische Polyester

Die Erfindung betrifft in der Schmelze verarbeitbare thermotrope voll-aromatische Polyester, ein Verfahren zur Herstellung dieser Polyester sowie ihre Verwendung zur Herstellung von Formkörpern.

Thermotrope voll-aromatische Polyester auf der Basis von p Molen p-Hydroxybenzoesäure, q Molen Terephthalsäure oder Isophthalsäure und r Molen Diphenolen, wie Hydrochinon oder 4,4′-Dihydroxydiphenyl, sind nach der DE-OS 20 25 971 bekannt. Hierbei gelten die Bedingungen q : r = 10 : 15 bis 15 : 10, p : q = 1 : 100 bis 100 : 1 und p + q + r = 3 bis 600. Diese Polyester lassen sich nur dann gut verarbeiten, wenn Terephthalsäure im wesentlichen durch die die Kristallinität störende Isophthalsäure ersetzt wird, was aber zu einer nicht unerheblichen Reduzierung einiger wesentlicher mechanischer und thermischer Eigenschaften führt.

Nach der Europäischen Patentschrift 134 956 sind thermotrope voll-aromatische Polyester auf der Basis von (a) p-Hydroxybenzoesäure, (b) Iso- und gegebenenfalls Terephthalsäure, (c) Hydrochinon und (d) 3,4′ und/oder 4,4′-Dihydroxydiphenyl, 3,4′- und/oder 4,4′-Dihydroxydiphenyläther und/oder 3,4′- und/oder 4,4′-Dihydroxydiphenylsulfid bekannt, wobei das Molverhältnis der einkondensierten Reste a/b = 80 : 20 bis 50 : 50, das Molverhältnis der einkondensierten Reste b/c/d = 20 : 10 : 10 bis 50 : 48 : 2, das Molverhältnis der einkondensierten Reste b/ (c + d) = 0,95 bis 1,05 und der Terephthalsäureanteil der Komponente (b) bis zu 50 Mol-% betragen. Die Vicat-B-Temperaturen der beschriebenen Mischpolyester liegen mit 128-148 °C jedoch auf einem verhältnismäßig niedrigen Niveau, wodurch deren Verwendbarkeit begrenzt ist.

Aufgabe der vorliegenden Erfindung war es, thermotrope vollaromatische Polyester möglichst hoher Wärmeformstabilität bereitzustellen, die sich unterhalb von 400 °C thermoplastisch zu Formteilen mit hervorragenden mechanischen Eigenschaften verarbeiten lassen.

Die bevorzugten neuen thermotropen voll-aromatischen Polyester sollten eine Vicat-B-Erweichungstemperatur haben, die vorzugsweise in dem Bereich von 150-250 °C liegt. Außerdem sollten diese Polyester eine Kerbschlagzähigkeit von 10-25 kN/m und mehr, Biegemoduli von 10-15 GPa und höher und Biegefestigkeiten von 100-250 MPa oder mehr aufweisen.

Überraschenderweise wurde gefunden, daß voll-aromatische Polyester, die einkondensierte Rest von p-Hydroxybenzoesäure, Terephthalsäure und gegebenenfalls Isophthalsäure und/oder Resorcin; 4,4′-Dihydroxydiphenyl und/oder Hydrochinon und als weitere Diphenolkomponente 3,3′-Dichlor-4,4′-dihydroxydiphenyl enthalten, bei Einhaltung definierter Molprozente der erwähnten Bestandteile die gewünschte Kombination der oben erwähnten vorteilhaften Eigenschaften besitzen.

Gegenstand der Erfindung sind in der Schmelze verarbeitbare thermotrope voll-aromatische Polyester, die im wesentlichen

(a) zu 20-70 Molprozent aus den wiederkehrenden Einheiten der Formel

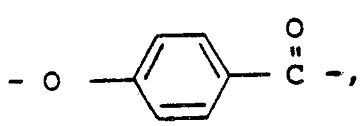

(b) 10-40 Molprozent aus den Einheiten der Formel

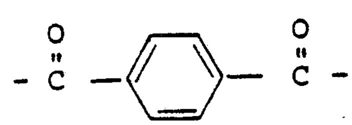

(c) 0-15 Molprozent aus einer oder beiden Einheiten der Formel

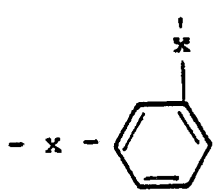

worin X = $-\underset{\underset{O}{\|}}{C}-$

oder -O- bedeutet,

(d) 0-33 Molprozent aus den Einheiten der Formel (n)

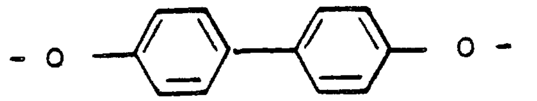
und/oder
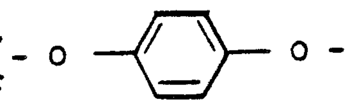

und

(e) 2-40 Molprozent aus den Einheiten der Formel

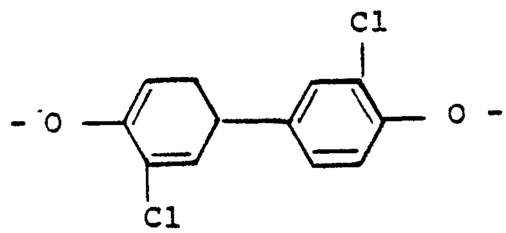

bestehen.

Die wiederkehrenden Einheiten der Formeln a) bis e) liegen bei den erfindungsgemäßen Polyestern bevorzugt in statistischer Verteilung vor. Segmente oder Blöcke der wiederkehrenden Einheiten werden jedoch erfindungsgemäß nicht ausgeschlossen, wenngleich darauf zu achten ist, daß längere Blöcke der p-Hydroxybenzoesäure-Einheiten den Schmelzpunkt und die Schmelzviskosität stark erhöhen können

Die bevorzugten erfindungsgemäßen Polyester sind dadurch gekennzeichnet, daß sie zu 40-60 Molprozent aus dem einkondensierten Rest (a), zu 15-20 Molprozent aus dem einkondensierten Rest (b), zu 4-6 Molprozent aus einem oder beiden der einkondensierten Reste (c), zu 5-17 Molprozent aus einem oder beiden der einkondensierten Reste (d) und zu 3-15 Molprozent aus dem einkondensierten Rest (e) bestehen.

Als Endgruppen können die erfindungsgemäßen Polyester -COOH, -OH, Acyloxy und von Kettenabbrechern herrührende Reste enthalten. Als Kettenabbrecher eignen sich monofunktionelle aromatische Hydroxylverbindungen, wie 4-Hydroxydiphenyl und p-Nonylphenol, und aromatische Monocarbonsäuren, wie Benzoesäure und Diphenylcarbonsäuren, in Mengen von 0,5 bis 5 Mol-%, bezogen auf Diphenole bzw. Dicarbonsäuren.

Die erfindungsgemäßen Polyester sind in an sich bekannter Weise, z.B. durch Umsetzung der Säure- und Phenolkomponenten oder Umesterung der reaktiven Derivate der Verbindungen (a) bis (e), z.B. ihrer Ester bzw. Säurechloride, und anschließende Polykondensation, die gegebenenfalls in Gegenwart von Kettenabbrechern und/oder Katalysatoren stattfindet, nach verschiedenen Verfahren herstellbar. Geeignete Ausgangsverbindungen sind also insbesondere Arylester, Acylester und Säurechloride. Die 3,3′-Dichlor-4,4′-dihydroxydiphenyl-Komponente kann darüber hinaus von der Herstellung her bis zu 10 Gew.-%, vorzugsweise bis zu 5 Gew.-%, Trichlor- und Monochlordiphenol enthalten.

Bei einem bevorzugten Syntheseverfahren werden die niederen $C_1$-$C_4$-Acylderivate, vorzugsweise die Acetate, der p-Hydroxybenzoesäure, des 4,4′-Dihydroxydiphenyls und/oder Hydrochinons, des 3,3′-Dichlor-4,4′-dihydroxydiphenyls und gegebenenfalls des Resorcins mit der Terephthalsäure und gegebenenfalls Isophthalsäure umgesetzt. Die niederen Acylester können vorzugsweise hierbei auch in situ hergestellt werden. Die Acetate der phenolischen Verbindungen werden bevorzugt.

Die Umsetzung erfolgt im allgemeinen in dem Temperaturbereich von 250 bis 385°C, gegebenenfalls unter vermindertem Druck und in Gegenwart von Kettenabbrechern und Katalysatoren. Man startet die Reaktion in der Regel bei niedrigen Temperaturen und erhöht bei fortschreitender Polykondensation die Temperatur kontinuierlich. Bei nachlassender Reaktionsgeschwindigkeit empfiehlt sich das Anlegen eines Vakuums, das ausgehend vom Normaldruck, vorzugsweise kontinuierlich bis auf ca. 0,1 mbar erhöht werden kann.

Es kann zweckmäßig sein, die Diolkomponenten in einem Überschuß von 1-5 Mol-% einzusetzen, da während der Polykondensation durch Sublimation entsprechende Verluste eintreten können. Die Ausgangskomponenten werden daher bevorzugt in solchen Mengen eingesetzt, daß Carboxyl- zu Hydroxylkomponenten in einem Molverhältnis von 0,98 bis 1,02 stehen. Die Reaktionen können sowohl in der Schmelze als auch in flüssigen wärmeleitenden Medien, z.B. dem eutektischen Gemisch aus Diphenyloxid und Diphenyl, durchgeführt werden. Das Acidolyseverfahren in der Schmelze wird im allgemeinen bevorzugt.

Die Umesterungsreaktionen und auch die Polykondensationsreaktionen können in bekannter Weise katalytisch beschleunigt werden. Als Katalysatoren fir die Polykondensation eignen sich z.B. Lewis-Säuren, wie $BF_3$, und Halogenwasserstoffsäuren, wie HCl, Dialkyl- und Diarylzinnoxide; Di-butyl-zinn-diacetat, Di-butyl-dimethoxy-zinn, Alkoxytitansilikate, Titanalkoxide; Magnesium-, Mangan(II)-, Eisen(II)-, Natrium-, Kalium- und Zinkacetat; Alkali- und Erdalkalimetallsalze, wie Phosphate, Carbonsäuresalze; Magnesiumacetylacetonat, Zinkacetylacetonat; Komplexsalze oder Mischsalze der Nebengruppenelemente, z.B. Vanadium, Titan, Mangan, Cobalt, Nickel, Zink, Lanthan, Cer, Zirkonium, oder der Elemente aus anderen Gruppen des Periodensystems, z.B. Germanium, Zinn, Blei und Antimon. Vorzugsweise betragen die Katalysatormengen 0,01 bis 0,2 Gew.-%, bezogen auf das Gesamtgewicht der eingesetzten Monomeren.

Die erfindungsgemäßen Polyester können, falls gewünscht, anschließend noch einer Festphasennachkondensation unter vermindertem Druck bei Temperaturen von 220 bis 320 °C unterworfen werden. Je nach der gewählten Temperatur erhöht sich hierbei innerhalb von 1 bis 28 Stunden das Molekulargewicht weiter, woraus Polyester mit merklich verbesserten mechanischen und thermischen Eigenschaften resultieren.

Aufgrund ihrer relativ geringen Schmelzviskosität können die erfindungsgemäßen thermotropen Polyester bevorzugt aus der Schmelze zu Spritzgußformteilen, Filamenten, Fasern, Bändern und Filmen verarbeitet werden. Hierbei sind die üblichen Verarbeitungsverfahren geeignet, wie Spritzguß, Extrusion, Pressen und Schmelzspinnen. Die dabei auftretenden Scherkräfte bewirken eine Molekülorientierung, die in hohem Maße von der Stärke der Scherkräfte beeinflußt wird. Die Schmelzviskosität der Polyester fällt bei Erhöhung der Scherkräfte stark ab, was eine ausgeprägte Strukturviskosität anzeigt.

Die aus den erfindungsgemäßen Polyestern hergestellten Formteile zeichnen sich durch hohe Zugfestigkeiten, Biegefestigkeiten, Biegemoduli, Kerbschlagfestigkeiten und insbesondere hohe Vicat-B-Erweichungstemperaturen aus. Da sie überdies außerordentlich chemikalien-resistent und flammwidrig sind, desgleichen eine große Dimensionsstabilität besitzen, eignen sie sich bevorzugt zur Herstellung von

- elektrotechnischen Artikeln, wie z.B. Isolatoren, gedruckten Schaltungen, Umhüllungen von integrierten Schaltungen, Armaturenteilen;
- chemisch-technischen Apparateteilen, wie Rohren, Behälterauskleidungen, Rotoren, Dichtungen, Gleitlagern;
- Teilen der Flugzeuginnenausstattung und
- medizinisch-technischen Geräteteilen, z.B. Bauteilen von Klimaanlagen, Ventilteilen.

Auch als Überzugs- und Beschichtungsmaterial, sowie zur Herstellung verstärkter oder gefüllter Formmassen, lassen sich die erfindungsgemäßen Polyester einsetzen. Der Verstärker- bzw. Füllstoffgehalt kann bei der letzterwähnten Anwendungsform 5 bis 65 Gew.-%, bezogen auf die verstärkte bzw. gefüllte Formmasse, betragen.

Die in den nachfolgenden Beispielen angeführten Viskositäten wurden wie folgt ermittelt:
Die relativen Lösungsviskositäten wurden an 0,1 %igen Lösungen der Polymeren in Pentafluorphenol bei 60 °C im Kapillarviskosimeter gemessen und daraus die inhärenten Viskositäten nach folgender Gleichung berechnet, in der C die Konzentration der Lösung in g/100 $cm^3$ bedeutet:

$$\eta_{inh} = \frac{\ln \eta_{rel.}}{C} \left[\frac{dl}{g}\right]$$

Die thermotrope Natur der Schmelzen wurde unter dem Polarisationsmikroskop bis 420 °C überprüft.

Die Polymerschmelztemperaturen wurden gemessen, indem gemahlene Proben auf einem Objektträger auf einer vortemperierten Heizplatte 5 Minuten lang (um Nachkondensationen zu vermeiden) erhitzt und danach im Lichtmikroskop auf Veränderungen geprüft wurden. Als Schmelzbereich wurde das Temperaturintervall angegeben, in welchem ein deutliches Verschmelzen der faserförmigen Polymerteilchen festgestellt wurde.

Die Spritzgießversuche wurden auf einer Spritzgießmaschine von Arburg, Typ Allrounder 270-210-500, durchgeführt. Die eingestellte Werkzeugtemperatur betrug 100 °C, falls nichts anderes erwähnt.

Die Biegefestigkeiten wurden nach DIN 53452, die Biegemoduli nach DIN 53457 gemessen. Die Bestimmung der Kerbschlagzähigkeit erfolgte am Normkleinstab nach DIN 53453, die der Vicat-B-Erweichungstemperaturen nach DIN 53460 an vorzugsweise getemperten Prüfplatten.

Die eingesetzten Stoffkomponenten werden in den Beispielen wie folgt abgekürzt:
PHB = p-Hydroxybenzoesäure
TPA = Terephthalsäure
IPA = Isophthalsäure
RC = Resorcin
DP = 4,4′-Dihydroxydiphenyl
HQ = Hydrochinon
ClDP = 3,3′-Dichlor-4,4′-dihydroxydiphenyl
EA = Essigsäureanhydrid

Herstellungsbeispiel von 3,3′-Dichlor-4,4′-dihydroxydiphenyl (ClDP)

100 g (0,537 Mol) 97 %iges 4,4′-Dihydroxydiphenyl wurden in 400 ml Essigsäureäthylester aufgeschlämmt, auf 4 °C gekühlt und unter Rühren langsam innerhalb von ca. 3 - 3,5 Stdn. 151 g (1,12 Mol) Sulfurylchlorid so zugetropft, daß die Temperatur der Reaktionsmischung 6 °C nicht überstieg. Danach wurde über Nacht bei Raumtemperatur nachgerührt. Nach Einengung der gelblichen Lösung bis zur Trockne wurde die erhaltene, leicht graue kristalline Masse zerkleinert und im Vakuumtrockenschrank bei 80 °C nachgetrocknet. Das Rohprodukt bestand zu 91 Gew.-% aus 3,3′-Dichlor-4,4′-dihydroxydiphenyl, 4 Gew.-% Trichlor- und 2,5 % Monochlorbiphenol. Schmelzbereich 128-132 °C.

Nach Reinigung durch Vakuumdestillation wurde in ca. 95 %iger Ausbeute eine weiße kristalline Masse erhalten mit einem Gehalt an 3,3′-Dichlor-4,4′-dihydroxydiphenyl von 92-98%.

Beispiel 1:

Molverhältnisse (= MV) von PHB:TPA:ClDP:DP = 0,6:0,2:0,03:0,17
In einem 1,3 l Reaktor aus Hastelloy B mit Ankerrührer wurden o.g. Substanzen in folgenden Mengen vorgelegt:
p-Hydroybenzoesäure 248,8 g (1,8 Mol)
Terephthalsäure 99,7 g (0,6 Mol)
3,3′-Dichlor-4,4′-dihydroxydiphenyl destilliert 23,0 g (0,09 Mol)
4,4′-Dihydroxydiphenyl 95,1 g (0,515 Mol)

Die auch in den folgenden Beispielen zugefügten Überschüsse einer Diolkomponente in Höhe von 1-5 Mol-% dient dem Ausgleich von Verlusten durch Sublimation während der Polykondensation.

Danach wurde durch 3-maliges Evakuieren (< 5 Torr) und Wiederbelüften mit Stickstoff der Sauerstoff aus dem Reaktor entfernt, 321,6 g (3,15 Mol) Essigsäureanhydrid zugefügt und unter Rühren 1 Stunde am Rückfluß gekocht. Anschließend wurden durch kontinuierliche Temperaturerhöhung auf 365 °C (Innentemperatur) 361 g = 96% der theoretisch zu erwartenden Menge an Essigsäure innerhalb von 90 Minuten abdestilliert und danach bis zum starken Anstieg des Rührwiderstandes unter einem Vakuum von 100 Torr weiterkondensiert (8 Minuten). Die Endtemperatur betrug 383 °C, die Gesamtdestillatausbeute 98%. Die Polymermasse wurde im heißen Zustand dem Reaktor entnommen und nach Erkalten durch Schneiden und Vermahlen zerkleinert. Die an einer 0,1 %igen Lösung in Pentafluorphenol gemessene inhärente Viskosität betrug 7,0 dl/g. Das Polymere wurde bei 388 °C (höchster Wert des eingestellten Temperaturprofils) zu 2 und 6 mm dicken Prüfplatten spritzgegossen. Die thermischen und mechanischen Eigenschaften sind in den Tabellen 1) und 2) wiedergegeben

Beispiel 2:

MV von PHB:TPA:ClDP:DP = 0,6:0,2:0,05:0,15
PHB 248,8 g (1,8 Mol)
TPA 99,7 g (0,6 Mol)
ClDP dest. 38,3 g (0,15 Mol)
DP 86,3 g (0,464 Mol)

EA 321,6 g (3,15 Mol)

Die Durchführung der Reaktion erfolgte analog Beispiel 1. Die inhärente Lösungsviskosität mehrerer Ansätze betrug 7-7,2 dl/g. Das Polymere wurde bei 360 °C zu Prüfkörpern mit sehr glatter Oberfläche verspritzt.

Beispiel 3:

| | | MV |
|---|---|---|
| PHB | 248,8 g (1,8 Mol) | 60 |
| TPA | 99,7 g (0,6 Mol) | 20 |
| ClDP | 76,6 g (0,3 Mol) | 10 |
| DP | 57,5 g (0,309 Mol) | 10 |
| EA | 321,6 g (3,15 Mol) | |

Durchführung analog Beispiel 1 mit folgenden Abweichungen: Destillations/Kondensationszeit bis zum Anlegen des Vakuums 110 Minuten, Innentemperatur 373 °C.

$\eta_{inh}$ (mehrere Ansätze) = 6-6,6 dl/g

Das Polymere wurde durch Spritzgießen bei 321 °C zu Prüfkörpern verarbeitet (vgl. Tab. 1 und 2).

Beispiel 4:

| | | MV |
|---|---|---|
| PHB | 248,8 g (1,8 Mol) | 60 |
| TPA | 99,7 g (0,6 Mol) | 20 |
| ClDP | 114,8 g (0,45 Mol) | 15 |
| DP | 27,9 g (0,15 Mol) | 5 |
| EA | 321,6 g (3,15 Mol) | |

Abweichungen vom Beispiel 1:

Reaktionszeit ohne Vakuum 165 Minuten, Vakuumkondensationszeit 135 Minuten (bis 1 Torr), Endtemperatur 323 °C. $\eta_{inh}$ 6,3 dl/g.

Vergleichsbeispiel 1:

| | | MV |
|---|---|---|
| PHB | 124,4 g (0,9 Mol) | 60 |
| TPA | 49,8 g (0,3 Mol) | 20 |
| DP | 55,9 g (0,3 Mol) | 20 |
| EA | 160,8 g (1,57 Mol) | |

Die Reaktion erfolgte analog Beispiel 1, jedoch ohne Vakuumkondensation. Das Polymere lag nach 96% Destillatausbeute bei einer Endtemperatur von 380 °C bereits in fester Form vor.

$\eta_{inh}$ = 1,0 dl/g, Polymerschmelzbereich 400-410 °C.

Beispiel 5:

| | | MV |
|---|---|---|
| PHB | 248,8 g (1,8 Mol) | 60 |
| TPA | 79,7 g (0,48 Mol) | 16 |
| IPA | 19,9 g (0,12 Mol) | 4 |
| CIDP | 23,0 g (0,09 Mol) | 3 |
| DP | 97,8 g (0,525 Mol) | 17 |
| EA | 321,6 g | |

Katalysator: 20 mg Eisen(II)-acetat
Arbeitsweise analog Beispiel 1.

95% der theoretischen Menge an Essigsäure wurden innerhalb von 2 Stunden abdestilliert, weitere 4% innerhalb von 17 Minuten bei einem Vakuum von 2 Torr und einer Endtemperatur von 350° C. Erhalten wurde eine metallisch glänzende, fadenziehende zähe Polymermasse mit einer inhärenten Viskosität von 5,5 dl/g, die bei 360° C zu Prüfplatten mit glatter Oberfläche verspritzt wurde (Tab. 1 und 2).

Beispiel 6:

| | | MV |
|---|---|---|
| PHB | 248,8 g (1,8 Mol) | 60 |
| TPA | 79,9 g (0,48 Mol) | 16 |
| IPA | 19,9 g (0,12 Mol) | 4 |
| CIDP Rohpr. | 38,3 g (0,15 Mol) | 5 |
| DP | 83,8 g (0,45 Mol) | 15 |
| EA | 321,6 g | |

Durchführung der Kondensation wie im Beispiel 1 beschrieben. Als obere Temperaturgrenze für die Polykondensation wurden 340° C eingestellt.
Die inhärente Viskosität des Polymeren betrug 5,8 dl/g.

Beispiel 7:

| | | MV |
|---|---|---|
| PHB | 248,7 g (1,8 Mol) | 60 |
| TPA | 79,9 g (0,48 Mol) | 16 |
| IPA | 19,9 g (0,12 Mol) | 4 |
| CIDP | 76,6 g (0,3 Mol) | 10 |
| DP | 58,7 g (0,315 Mol) | 10 |
| EA | 321,6 g | |

Katalysator: 20 mg Eisen(II)-acetat

Die Kondensation erfolgte analog Beispiel 1, jedoch bei 307° C maximaler Innentemperatur. Die Vakuumkondensationsphase wurde auf 3 Stunden ausgedehnt. Es resultierte eine sehr zähe Polymermasse der inhärenten Viskosität 6,4 dl/g.

Beispiel 8:

| | | MV |
|---|---|---|
| PHB | 248,7 g | 60 |
| TPA | 79,9 g | 16 |
| IPA | 19,9 g | 4 |
| CIDP | 114,8 g | 15 |
| DP | 27,9 g | 5 |
| EA | 321,6 g | |

Katalysator: 20 mg Eisen(II)-acetat

Verfahrensweise wie unter Beispiel 1 beschrieben. Die Vakuumkondensationsphase betrug 1,5 Stunden bei 2-4 Torr, die Temperatur der Polymermasse am Ende der Kondensation 323° C. $\eta_{inh}$ = 5,3 dl/g. Durch nachträgliches Erhitzen des gemahlenen, Holspan-ähnlichen Materials auf 250° C/27 Stunden erhöhte sich $\eta_{inh}$ auf 6,4 dl/g. Das Polymere wurde durch Spritzgießen bei 340° C (Formtemperatur 25° C) zu Prüfkörpern verarbeitet (vgl. Tabellen 1 und 2).

Beispiel 9:

| | | MV |
|---|---|---|
| PHB | 248,7 g (1,8 Mol) | 60 |
| TPA | 80,0 g (0,48 Mol) | 16 |
| IPA | 19,9 g (0,12 Mol) | 4 |
| CIDP | 114,8 g (0,45 Mol) | 45 |
| Hydrochinon | 24,8 g (0,225 Mol) | 15 |
| EA | 321,6 g (3,15 Mol) | |

Katalysator 20 mg Fe(II)-acetat

Durchführung analog Beispiel 1, maximale Kondensationstemperatur 317° C. Die metallisch glänzende, fadenziehende Polymerschmelze hatte eine inhärente Viskosität von 3,4 dl/g. Das Polymer wurde durch Spritzgießen bei 320° C (Formtemperatur 25° C) zu Prüfkörpern verarbeitet (vgl. Tabellen 1 und 2).

Vergleichsbeispiel 2 ohne DCIP:

| | | MV |
|---|---|---|
| PHB | 248,8 g (1,8 Mol) | 60 |
| TPA | 79,7 g (0,48 Mol) | 16 |
| IPA | 19,9 g (0,12 Mol) | 4 |
| DP | 112,8 g (0,606 Mol) | 20 |
| EA | 321,6 g (3,15 Mol) | |

Verfahren wie in Beispiel 1 beschrieben.
Abweichungen: Destillationsphase ohne Vakuum 1,5 Stdn, Vakuumdestillation 8 Minuten, Endtemperatur 398° C.

Die erhaltene Polymermasse besaß eine inhärente Viskosität von 6,0 dl/g. Der auf einer Heizplatte

gemessene Schmelzpunkt lag zwischen 390 und 400 ° C. Für die Spritzgießverarbeitung waren Zylindertemperaturen von 390 ° C erforderlich.

Beispiel 10:

Folgende Mischung wurde analog Beispiel 1 polykondensiert:

| | | MV |
|---|---|---|
| PHB | 248,4 g (1,8 Mol) | 60 |
| TPA | 79,9 g (0,48 Mol) | 16 |
| IPA | 19,8 g (0,12 Mol) | 4 |
| ClDP | 122,4 g (0,48 Mol) | 16 |
| HQ | 14,4 g (0,132 Mol) | 4 (plus Überschuß) |
| EA | 346,2 g | |

Katalysator: 1,5 g $Na_3PO_4 x 12 H_2O$

Die Gesamtkondensationszeit betrug 2 Stunden und 40 Minuten (Vakuumkondensation), die Endtemperatur der Polymermasse lag bei 332 ° C. Insgesamt wurden 380 ml Destillat, entsprechend einem 99,7 %igen Umsatz, erhalten.

Der gemessene Schmelzbereich des flüssig-kristallinen Copolyesters lag bei 275-285 ° C, als inhärente Lösungsviskosität wurden 4,7 dl/g gemessen.

Beispiel 11:

PHB 82,8 g (0,62 Mol)
TPA 33,2 g (0,20 Mol)
ClDP 40,8 g (0,16 Mol)
RC 4,8 g (0,044 Mol)
EA 130,4 g (1,13 Mol)

Als Katalysator wurden 0,5 g $Na_3PO_4$ x 12 $H_2O$ eingesetzt. Nach einer Gesamtkondensationsdauer von 2 Stunden und 20 Minuten (30 Minuten Vakuumkondensation) wurde die Polykondensation bei einer Temperatur von 340 ° C und einem aus der Menge an destillierter Essigsäure berechneten Umsatz von 99% abgebrochen. Es wurde eine metallisch glänzende, zähe Polymermasse erhalten, aus der Fäden gezogen werden konnten.
Die inhärente Viskosität betrug 4,3 dl/g.

Tabelle 1

| Zusammensetzung und thermische Eigenschaften | | | | | | | |
|---|---|---|---|---|---|---|---|
| Beispiel | Zusammensetzung in Mol-% | | | | | Schmelzbereich (°C) | Vicat B (°C) |
| | PHB | TPA | IPA | ClDP | DP o.a. | | |
| 1 | 60 | 20 | - | 3 | 17 | 380-390 | 250 |
| 2 | 60 | 20 | - | 5 | 15 | 370-380 | 234 |
| 3 | 60 | 20 | - | 10 | 10 | 330-340 | 192 |
| 4 | 60 | 20 | - | 15 | 5 | 300-310 | - |
| Vglch. 1 | 60 | 20 | - | - | 20 | 400-410 | - |
| 5 | 60 | 16 | 4 | 3 | 17 | 350-360 | 216 |
| 6 | 60 | 16 | 4 | 5 | 15 | 330-340 | 194 |
| 7 | 60 | 16 | 4 | 10 | 10 | 280-290 | - |
| 8 | 60 | 16 | 4 | 15 | 5 | 260-270 | 180 |
| 9 | 60 | 16 | 4 | 15 | 5HQ | 280-290 | 198 |
| Vglch. 2 | 60 | 16 | 4 | 0 | 20 | 390-400 | 2 |

Tabelle 2

| Mechanische Eigenschaften | | | |
|---|---|---|---|
| Beispiel | Biegefestigkeit $\sigma_{bB}$(MPa) | Biegemodul $E_b$ (GPa) | Kerbschlagzähigkeit $\alpha_k$ ($kJ/m^2 = kN/m$) |
| 1 | 145 | 9,5 | 22,9 |
| 2 | 150 | 13,3 | 13 |
| 3 | 178 | 11,6 | 13,5 |
| 4 | 183 | 13,3 | 27,9 |
| 5 | 147 | 10,2 | 21 |
| 6 | 157 | 10,7 | 19,0 |
| 7 | 257 | 12,4 | 25,9 |
| 8 | 207 | 13,2 | 20 |
| 9 | 188 | 9,5 | 10 |
| Vglch.2 | 106 | 8,2 | - |

## Ansprüche

1. In der Schmelze verarbeitbare thermotrope voll-aromatische Polyester, die im wesentlichen (a) zu 20-70 Molprozent aus den wiederkehrenden Einheiten der Formel

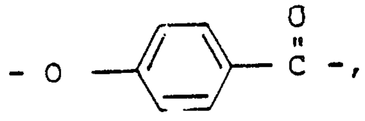

(b) 10-40 Molprozent aus den Einheiten der Formel

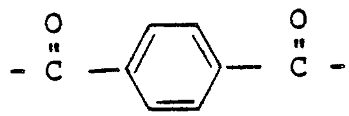

(c) 0-15 Molprozent aus einer oder beiden Einheiten der Formel

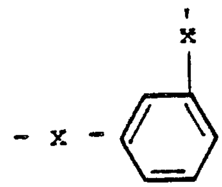

worin X = 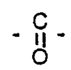

oder -O- bedeutet,

(d) 0-33 Molprozent aus den Einheiten der Formel (n)

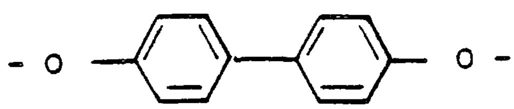 und/ oder 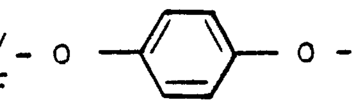

und

(e) 2-40 Molprozent aus den Einheiten der Formel

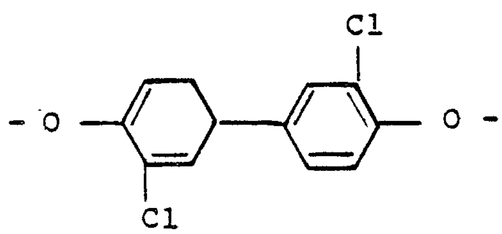

bestehen.

2. Polyester nach Anspruch 1, dadurch gekennzeichnet, daß sie zu 40-60 Molprozent aus dem einkondensierten Rest (a), zu 15-20 Molprozent aus dem einkondensierten Rest (b), zu 4-6 Molprozent aus einem oder beiden der einkondensierten Reste (c), zu 5-17 Molprozent aus einem oder beiden der einkondensierten Reste (d) und zu 3-15 Molprozent aus dem einkondensierten Rest (e) bestehen.

3. Verfahren zur Herstellung der Polyester nach den Ansprüchen 1 bis 2 durch Umsetzung der $C_1$-$C_4$ Acylderivate der p-Hydroxybenzoesäure, des 4,4′-Dihydroxydiphenyls und/oder Hydrochinons, des 3,3′-Dichlor-4,4′-dihydroxydiphenyls und gegebenenfalls des Resorcins mit Terephthalsäure und gegebenenfalls Isophthalsäure bei Temperaturen von 250-385 °C, gegebenenfalls unter vermindertem Druck und in Gegenwart von Kettenabbrechern und Katalysatoren.

4. Verfahren nach Anspruch 3, dadurch gekennzeichnet, daß man die in situ gebildeten Acetate der phenolischen Verbindungen mit Terephthalsäure und gegebenenfalls Isophthalsäure umsetzt.

5. Verfahren nach den Ansprüchen 3 bis 4, dadurch gekennzeichnet, daß sich eine Festphasennachkondensation anschließt.

6. Verwendung der Polyester nach den Ansprüchen 1 bis 2 zur Herstellung von Formkörpern, Filamenten, Fasern und Filmen.